# EUROPEAN PATENT APPLICATION

(11) **EP 4 386 638 A1**
(43) Date of publication of application: **19.06.2024**
(21) Application number: 22213483.5
(22) Date of filing: 14.12.2022
(51) Int. Cl.: G06Q 10/04, G06Q 10/06, G06Q 30/0283, G06Q 50/06

(54) **A METHOD OF MANAGING RESOURCE FLOW BETWEEN CONSUMER AND A RESOURCE SUPPLIER NETWORK**

(71) Applicant: Semantica ApS, 8240 Risskov (DK)
(72) Inventor: FALCK, Torben, 8240 Risskov (DK)
(74) Representative: Patrade A/S

(57) **Abstract**

The present invention relates to a computer implemented method of managing resource flow (10) between a consumer (20) and an external resource supplier network (30), said method comprising acts of:
- receiving (102) a consumption profile (22) for the consumer (20) for one or more consumer units (62);
- receiving (102) one or both of a resource buffer profile (24) for the consumer (20) for one or more consumer buffer units (64) or a resource source profile (26) for the consumer (20) for one or more consumer sources (66);
- receiving (102) resource time-of-the-day prices profile (32) for the external resource supplier network (30);
- based on the profiles, determining (104) a resource supply source (40) for covering real-time consumption (50) of the consumer, and
- instructing (106) a consumer controller (60) of which resource supply source (40) to be used for covering the real-time consumption (50) of the consumer,
wherein the consumption profile (22), one or both of the resource buffer profiles (24) and the resource source profile (26), and the resource time-of-the-day prices profile (32) comprises forecasted data for a first future time period (70) and wherein the resource supply source (40) is determined to obtain a minimum aggregated cost of the acquired resources (12) to cover the real-time consumption (50) of the consumer.

## Description

### Field of the Invention

The present invention relates to a computer implemented method of managing a resource flow between a consumer and an external resource supplier network based on consumer consumption, resource buffers, resource sources, and resource time-of-the-day prices for determining a resource supply source to obtain a minimum aggregated cost of the acquired resources to cover real-time consumption of the consumer.

### Background of the Invention

Resource management is becoming more and more important in the aim for a sustainable world and way of living. Sustainability thus both includes an environmental aspect of balancing the consumption of resources but also achieving a stable and reliable access to resources.

If we for example consider the energy production today, the number and efficiency of renewable energy sources such as wind, solar, wave-based et al increase continuously. In a small number of countries, renewable energy sources based on solar and wind power now supply more than 100% of peak power demand at specific times of the day.

However, integrating and balancing these high shares of renewable energy in full is still an unsolved task. One reason could be that the operation of electricity network systems (power grid systems) must provide a high certainty of power supply, which is still more easily met through the flexible operation of non-renewable sources such as coal and gas in view of how the systems are operated today. A positive estimate is that the wind and solar generated power is balanced 1:1 by fossil fuels such as coal and gas.

Thus, the reliance on renewable energy is fragile due to shifting conditions in the current paradigm. However, the reliance on non-renewable energy sources is also fragile due to other circumstances such as certainty of availability and supply.

Modest changes to public electricity network systems include implementations of better system control software and day-ahead weather forecasting.

With the development towards electrification of the energy production and distribution of energy between the production units and the consuming units, another challenge is arising: The limitation of the distribution network, e.g. grid systems. Renewable energy is by nature volatile and must be stored in another form as energy in a buffer if not used instantly.

More and more consumers have their own supplementing energy production units such as wind turbines and/or solar cells in combination with storage units for storing or buffering excess energy. In the case of electricity, but also other resources, the consumer may voluntarily or required by regulations direct excess resources to the distribution network and thus act as resource provider.

However, typically excess production of the individual consumer falls within a period of general over-production and therefore real-time demand may typically be low in these periods resulting in generally reduced prices. Such unbalanced resource production and any instability in resource supply will impact the prices and result in fluctuating prices.

In addition, with the advent of smart meters especially for energy, gas and water consumption, installed at each individual consumer for settlement of the consumers resources consumption, the utility companies know the consumption of consumers as a function of time and aligns the billing rates or prices to actual cost of resource generation and delivery. This has resulted in short-term varying prices for the consumer.

As of this writing, consumers are experiencing significant rate volatility with huge intraday fluctuation in prices. Different solutions have been proposed for the consumer to reduce the costs of acquired electricity from the grid. For example, by reducing the real-time consumption when the prices are high or to defer the use of power consuming units to periods with low prices as disclosed in US 2017/0285598 A1.

For other types of resources, the consumer has little choice but to pay the cost.

For consumers with their own energy producing units e.g. solar cells and storage units, various solar equipment companies have so-called inverters that may let the consumer set certain charging parameters for storing excess energy. However, this is a manual process for the consumer and every manufacturer implements their own control system.

From the consumers point of view, the optimal solution would be to be self-sufficient when the prices are high and defer any excess consumption to when the prices are low.

### Objectives of the Invention

One objective of the present disclosure is to achieve a computer-implemented method of procuring resources at optimum prices, resources such as power and water, or other resources obtained over a distribution net with fluctuating settlement prices.

Furthermore, it is an objective to overcome one or more of the shortcomings of the aforementioned prior art.

Another objective of the present disclosure is to achieve a controller to control the energy source to be used by the consumer to cover any real-time consumption.

### Description of the Invention

One objective of the invention is achieved by a computer implemented method of managing resource flow between a consumer and a resource supplier network.

The method comprising acts of
- receiving a consumption profile for the consumer for one or more consumer units;
- receiving one or both of a resource buffer profile for the consumer for one or more consumer buffer units, or a resource source profile for the consumer for one or more consumer sources;
- receiving resource time-of-the-day prices profile for the external resource supplier network;
- based on the consumption profile, the resource buffer profile and/or the resource source profile, and the resource time-of-the-day prices profile, determining a resource supply source for covering real-time consumption of the consumer, said resource supply sources being one or more of the consumer's one or more buffer units, the consumer's one or more consumer sources or the external resource supplier network, and
- instructing a consumer controller of which resource supply source to use for covering the real-time consumption of the consumer.

The consumption profile, one or both of the resource buffer profiles and the resource source profile, and the resource time-of-the-day prices profile comprise forecasted data for a first future time period.

The resource supply source is determined to obtain a minimum aggregated cost of the acquired resources to cover the real-time consumption of the consumer.

The profiles may be in form of algorithms, time dependent dataset, a data driven model or comparable representations of forecasted behavioural information.

The consumer is considered a resource consuming entity, e.g. a household, a production facility, a farmer, a grocery store etc., or even the very equipment such as household appliances, production machinery etc. using the resource.

The resources may include power, cold or hot water, gas or other resources obtained over a distribution net with fluctuating settlement prices. One effect of the method is that the supply source to be used is selected automatically, so that the consumer does not have to consider when and how much of the resources to consume at a specific time to keep the aggregated costs at an optimized minimum. This may be beneficial for the consumer in that the consumer does not have to change habits in terms of time of consumption while having to check the time-of-day prices.

For consumers big and small, changing habits in terms of deferring the consumption may also reduce the aggregated costs, but it comes at other costs for the consumer, not least in terms of the conveniency aspect.

Furthermore, deferring consumption does not address the root problem, namely that prices by nature are volatile.

In case the consumer is e.g. a stockbreeder or a manufacturing company with a production unit, the consumption of resources necessary to keep the livestock alive or to keep a production line running may not be deferred. By managing the resource flow in accordance with the method and thus, using the optimal resource supply source for covering the real-time consumption of the consumer, the required resource will still be provided to the consumer but in consideration of how to reduce the aggregated costs of the required resources.

Each of the received profiles may comprise a large number of data, making the estimation of which supply source to choose for the real-time consumption practically impossible for humans to do manually due to the many parameters and combinations hereof.

Another effect may be that the consumer's on-premise energy production units and/or buffers may be used more optimally. E.g. the consumer sources may not need to be driven in a maximum state if the resource consumption can be met more profitably by using stored resources from a buffer unit or from the distribution network.

In one embodiment of the computer implemented method, the act of determining the resource supply source for covering the real-time consumption of the consumer is executed using a first trained data driven model,
- receiving the consumption profile, the resource buffer profile and/or the resource source profile, and the resource time-of-the-day prices profile; and
- based on the received profiles, estimating a resource shortage over at least a second future time period, and
- based on the estimated resource shortage and the resource time-of-the-day prices profile, estimating an acquisition profile with minimum aggregated cost of the acquired resources over the second future period to determine the resource supply source to cover the real-time consumption of the consumer.

As previous discussed, each of the received profiles may comprise a large amount of data, making the estimation of which supply source to choose for the real-time consumption practically impossible for humans to do manually due to the many parameters and combinations hereof. This may beneficially be solved by using trained data driven models.

A consumer has no way to put knowledge about his previous or future consumption to good use in terms of deciding when to procure energy and at what price.

One effect of obtaining a resource acquisition profile is that the method can be performed in central or external computing units e.g. cloud based, and the acquisition profile can be received by the end-user controller for controlling which resource supply source to be used over a time period. This may be beneficial for performing the method in a distributed system of external computing units and edge devices, where the edge devices can be updated with acquisition profiles on a regular basis and then autonomously execute the task of harvesting the energy from the supply side in the timeslots determined by the AI. The edge devices will also continue to be operable even in case the communication with the central computing device is lost.

The end-user controller may be configured to push or pull for instructions of which resource supply source to be used for covering the real-time consumption of the consumer.

A further advantage may be that relatively simple edge devices with very low computational power may be used thereby reducing the costs of the edge devices.

An additional effect of the method is that the consumer controller may be implemented in existing energy converters to run the procurement tasks. I.e. if a consumer has a solar cell system which requires specific hardware and software modules to be operated, the consumer controller may be implemented in already existing modules. Alternatively, the end-user controller may be a modular controller which can be extended to include additional modules.

Yet another effect of the embodiment may be that a specifically trained model or set of models is produced for every consumer in regard to the consumer's own consumption, buffers and/or consumer source units. The consumer's specific model(s) may be retrained with newly produced and other relevant data to fine tune the model for better prediction precision and thus for continuously obtaining an optimized acquisition profile.

In one aspect, the act of determining the resource supply source for covering the real-time consumption of the consumer is executed by artificial intelligence (AI) using the one or more first data driven models.

The AI may beneficially use the optimized acquisition profiles to determine an optimum procurement strategy.

A model can be viewed as a mapping or function that maps input values, here the different profiles, to output values. The special type and the internal structure of the model or the algorithm are not essential for the implementation of the method according to the invention.

In one embodiment of the computer implemented method, the buffer profile includes available buffer capacity and available stored resources. The available stored resources are configured as supply source and the available buffer capacity is configured as real-time consumption.

One effect of this embodiment may be that the algorithm includes the buffer both as a resource supply source and a consumption unit.

In a further embodiment of the computer implemented method, the first future time period is up to 1 month, preferably 6 months or 2 years, and the second future time period is shorter than the first future time period and ends before the first future time period ends.

The disclosed method is not limited to these intervals or time periods. Furthermore, the duration of the periods may be longer or shorter than the listed periods depending on the development of data analytics and data acquisition in the future.

One effect the embodiment may be that the forecasted resource shortage and the acquisition profile are calculated for a time period comprised within the time period of the forecasted consumption, buffer, source and prices profiles.

In one embodiment, the computer implemented method comprises a further act of receiving a maximum limit of resource flow. The maximum limit is determined by hardware specifications at a connection point, connecting the consumer and an external resource supplier network.

One effect of including the hardware specifications in the method may be beneficial in protecting any hardware included in the distribution network, the consumer controller, the consumer buffer etc. The maximum limit may refer to a maximum flow rate, a maximum storage limit or likewise, which if exceeded may result in damages to the hardware.

Including such limitations may have significant results on the algorithms and models.

In one embodiment of the computer implemented method, one or more of the consumption profiles for the consumer, the resource buffer profile for the consumer, the resource source profile for the consumer, and the resource time-of-the-day prices profile for the external resource supplier network are obtained by a second trained data driven model receiving datasets comprising one or more of:
- historical user consumption data,
- weather forecast,
- satellite imagery,
- local condition sensory data,
- hardware specification,
- historical resource prices,
- current demand for the resources,
- current resource production,
- historical resource consumption of the consumer,
- historical resource production of the consumer, and
- historical resource buffer capacity of the consumer.

Obtaining the profiles may include generation of the profiles.

Each of the first and second trained data driven model may include a number of models or sub models.

One effect of using historical consumption data, weather forecast or satellite imagery is the fact that the models may be continuously trained and retrained in consideration of how the ambient surrounding may influence not only the consumer's consumption but also the time-of day prices and resource production.

In one embodiment of the computer implemented method, one or more of the data driven models are trained and validated by receiving datasets comprising one or more of:
- historical consumption profile for the consumer,
- historical resource buffer profile for the consumer,
- historical resource source profile for the consumer,
- historical resource time-of-the-day prices profile for the external resource supplier network,
- actual resource consumption of the consumer,
- actual state of the resource buffers of the consumer,
- actual resource production of the consumer,
- time-of-the-day prices for the external resource supplier, and
- historical aggregated resource costs of the end-user's resource consumption.

One effect of the embodiment using historical profiles is that the models can be trained, retrained, and validated based on previous output of the model.

One objective of the present disclosure is achieved by a computer implemented method of obtaining a trained data driven hyper model by receiving one or more of the first and second models for multiple consumers.

The hyper model may be configured for estimating resource shortage and a resource acquisition profile for multiple users.

Aggregating multiple consumer's first and or second models into one hyper model may achieve for predicting resource consumption and CO2 impact on a greater scale, e.g. for an entire country or even on a global scale.

In one embodiment, the computer implemented methods include a parameter configuration comprising initialization parameters, learning rate, and/or an error measure.

For continuously improving the method, error minimization may be used. This may include standard machine learning error measuring techniques - such as RMS, Rsquared, validation set, retraining etc.

In one embodiment of the computer implemented methods, the models are implemented as neural networks, e.g. autoencoders, wherein the parameter configuration comprises a number of layers, a number of neurons for each of the layers, and/or a number of epochs.

The special type and the internal structure of the neural network are not essential for the implementation of the method according to the invention but may preferably be constructed so that the use of neural networks ensures that the method is carried out effectively.

In an aspect, the first trained data driven model and/or the second trained data driven model may be a deep learning network such as a Convolutional Neural Network or Transformer network.

In one embodiment of the computer implemented methods, artificial intelligence is used for estimating the forecasted data for the first future time period and/or for estimating the parameter configuration of the one or more data driven models.

By using AI to make decisions based on the first, second and/or hyper model, we may achieve to not only automate energy procurement, but also to help prohibit overload of resource distribution networks, make better use of existing infrastructure, help optimize the needs for future infrastructure investments, predict, track and reduce CO2 emissions and help further human progress by providing vital access to resources such as energy at optimized prices.

One objective of the present disclosure is achieved by an end user controller configured for receiving instructions of a supply source to be used for covering the real-time consumption of the consumer. The consumer controller comprises means adapted to execute the received instructions of controlling which resource supply source to use for covering the real-time consumption of the consumer. The received instructions are generated by the method of managing resource flow in accordance with any of the disclosed embodiments.

The effects and advantages of the consumer controller may be in line with those previously described where the user controller constitutes a low computational edge device.

One objective of the present disclosure is achieved by one or more computing units configured to carry out any one or more of the methods according to any of the described embodiments.

One objective of the present disclosure is achieved by one or more computer program products, which causes the computing units to carry out any one or more of the methods according to any of the described embodiments.

One objective of the present disclosure is achieved by one or more machine-readable storage media having one or more of the above-described computer program products stored thereon.

### Description of the Drawing

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.
Figure 1 illustrates one embodiment of resource flow between a consumer and an external resource supplier network.
Figure 2 illustrates one embodiment of the computer implemented method of managing resource flow between a consumer and an external resource supplier network.
Figure 3 illustrates one embodiment of training one or more first models.

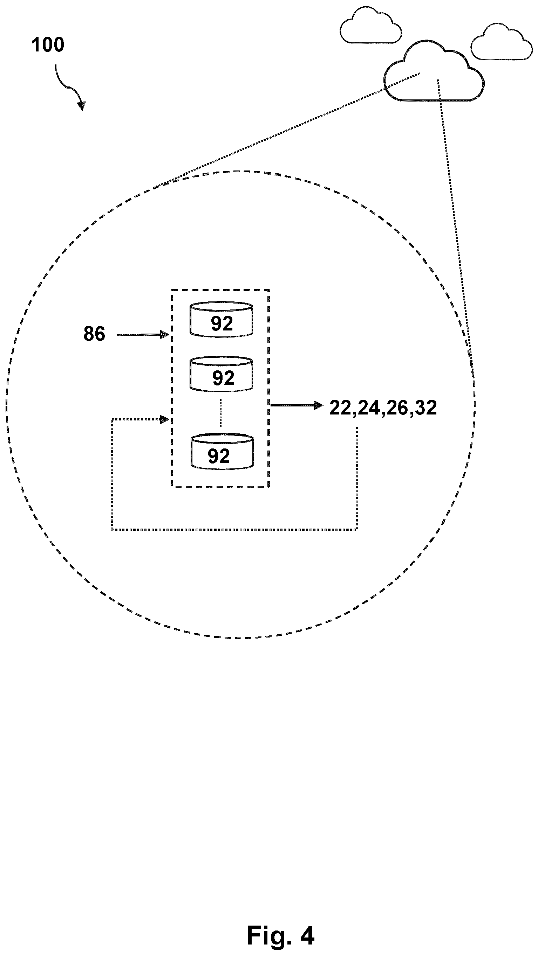

Figure 4 illustrates one embodiment of training one or more second models.
Figure 5 illustrates one embodiment of training a hyper model.

**Detailed Description of the Invention**

| No | Item: |
|---|---|
| 10 | resource flow |
| 12 | acquired resources |
| 20 | consumer |
| 22 | consumption profile |
| 24 | resource buffer profile |
| 26 | resource source profile |
| 30 | resource supplier network |
| 32 | resource time-of-the-day prices profile |
| 34 | acquisition profile |
| 36 | maximum limit |
| 40 | resource supply source |
| 50 | real-time consumption |
| 52 | resource shortage |
| 60 | consumer controller |
| 62 | consuming units |
| 64 | buffer units |
| 66 | consumer resource sources |
| 70 | first future time period |
| 72 | second future time period |
| 80 | connection point |
| 86 | data set |
| 90 | first model |
| 92 | second model |
| 94 | hyper model |
| 100 | managing method |
| 102 | receiving |
| 104 | determining |
| 106 | instructing |
| 108 | estimating |
| 200 | method, hyper model |
| 202 | receiving |
| 300 | computing units |
| 302 | computer program products |
| 304 | machine-readable storage medium |

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the singular forms "a" "an" and "the" are intended to include the plural forms, including "at least one" unless the content clearly indicates otherwise. "At least one" is not to be construed as limiting "a" or "an". It will be further understood that the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

It will be understood that although the terms "first" "second" "third" and the like may be used herein to describe various elements, these elements should not be limited by these terms. These terms are only used to distinguish one element from another element. Thus, "a first element" discussed below could be termed "a second element" or "a third element", and "a second element" and "a third element" may be termed likewise without departing from the teachings herein.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

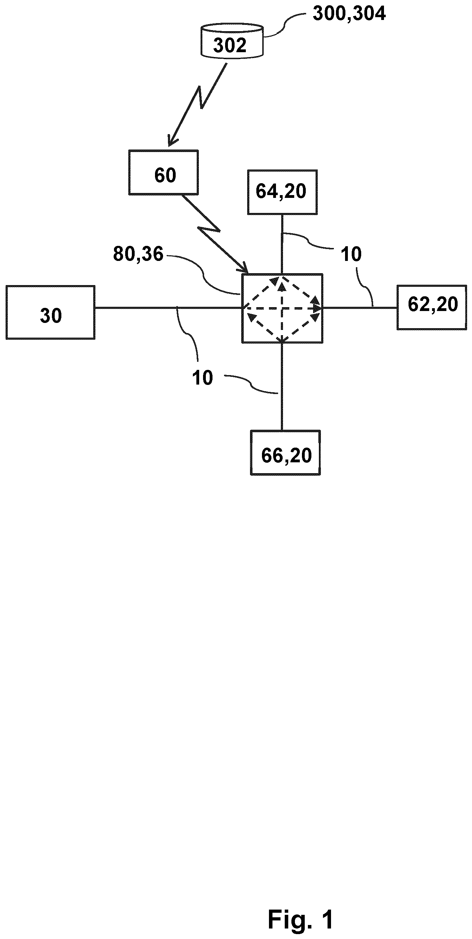

Figure 1 illustrates one embodiment of a resource flow 10 between a consumer 20 and an external resource supplier network 30. The consumer is defined by consuming units 62, buffer units 64 and/or consumer resource sources 66.

The buffer units 50 may be storage means adapted to specific resources such as accumulators or batteries for energy storage, water tanks for storing hot or cold water, gas tanks or comparable means depending on the nature of the resource.

The consumer resource sources 66 may be productions means or collection means such as wind turbines, solar cells, biofuel tank, slurry tanks, water collection tanks or comparable means depending on the nature of the resource. The means are adapted to produce or collect a resource.

The resource flow 10 between the consumer 20 and the external resource supplier network 30 is controlled by a consumer controller 60 controlling the resource supply source to be used for covering a real-time consumption of the consumer.

The consumer 20 and the external resource supplier network 30 are connected at a connection point 80. The connection point may be a maximum limit 36 of resource flow.

The resource flow may be managed by a computer implemented method carried out by one or more computing units 300. One or more computer program products 302 may cause the one or more computing units 300 to carry out one or more acts of the method. The computer program products 302 may be stored on one or more machine-readable storage media 304.

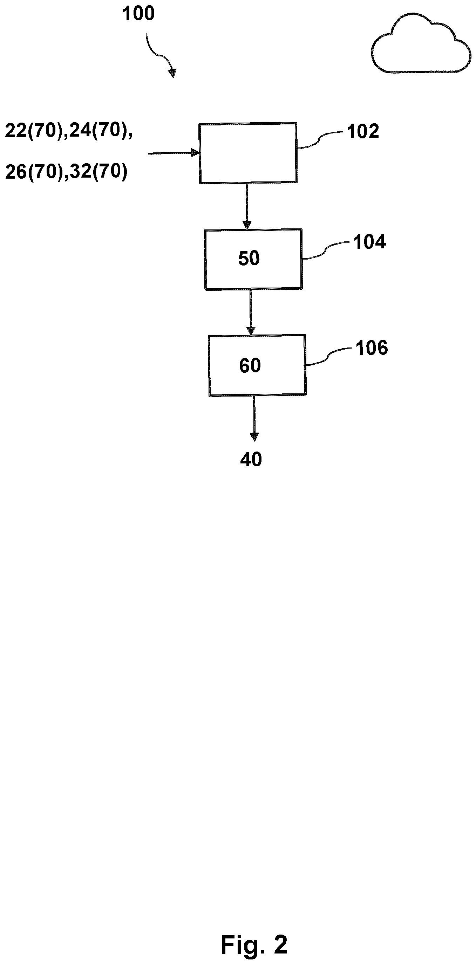

Figure 2 illustrates one embodiment of a computer implemented method 100 of managing resource flow between a consumer and an external resource supplier network.

The computer implemented method comprises one or more acts of receiving 102 a consumption profile 22 for the consumer, one or both of a resource buffer profile 24 for the consumer for one or more consumer buffer units or a resource source profile 26 for the consumer for one or more consumer sources, and a resource time-of-the-day prices profile for the external resource supplier network. The profiles may be received in a single act or may be received on multiple receiving acts.

The received profiles may comprise forecasted data for a first future time period 70, as illustrated by the paratheses.

The method comprises a further act of determining 104 a resource supply source 4 for covering a real-time consumption 50 of the consumer.

The resource supply source to be used is determined based on the received consumption profile 22, the resource buffer profile 24 and/or the resource source profile 26, and the resource time-of-the-day prices profile 32.

The resource supply sources 40 may be one or more of the consumer's one or more buffer units 64, the consumer's one or more consumer sources 66 or the external resource supplier network 30, as illustrated in figure 1.

The illustrated method furthermore comprises an act of instructing 106 a consumer controller 60 of which resource supply source 40 to use for covering the real-time consumption 50 of the consumer.

The computer implemented method may be performed on one or more computing units such as one or more external servers, in the cloud, in the consumer controller or distributed between one or more of the computing units.

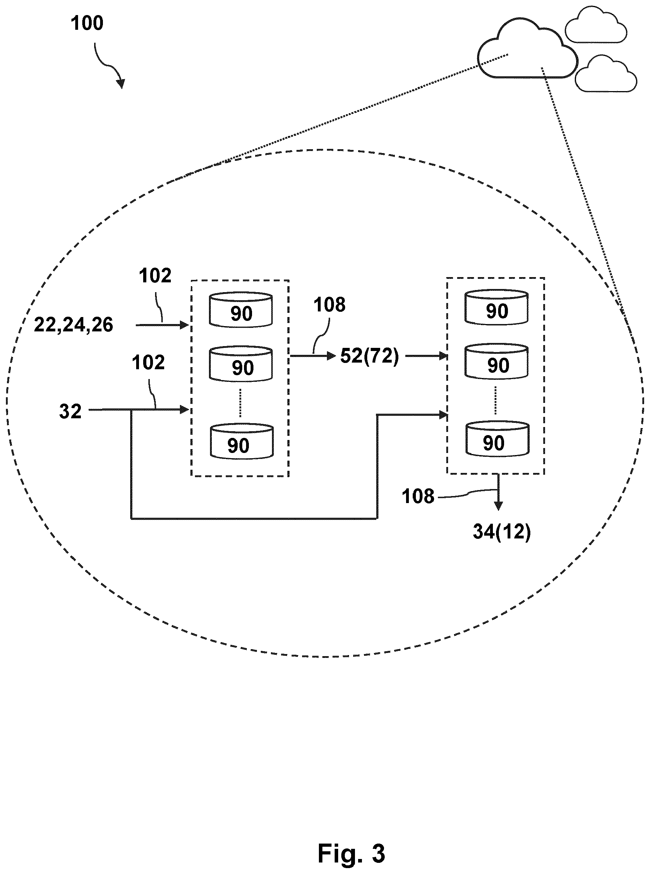

Figure 3 illustrates one embodiment of training one or more first models 90. The first models 90 may be algorithms trained by means of machine learning.

In the illustrated embodiment, the one or more first models 90 are trained by receiving 102 one or more of a consumption profile 22, a resource buffer profile 24 and/or a resource source profile 26, and a resource time-of-the-day prices profile 32.

The models are configured for estimating 108 a resource shortage 52 over at least a second future period 72 and based on the estimated resource shortage 52 and the resource time-of-the-day prices profile (32). The models are furthermore configured for estimating 108 an acquisition profile 34. The acquisition profile comprises information of which resource supply source to be used for covering a real-time consumption of the consumer over a future period e.g. the second period 72. The acquisition profile is estimated for obtaining minimum aggregated cost of the acquired resources 12 over the future period.

When referring to the acquisition profile comprising information of which resource supply source to be used for covering a real-time consumption of the consumer over a future period, e.g. the second period 72, it is meant the profile comprises information of which resource supply source to be used at specific times for covering the real-time consumption at that specific time. The profile then covers all the points in time within the future period.

The models may be trained on one or more computing units such as one or more external servers, in the cloud, in the consumer controller or distributed between one or more of the computing units.

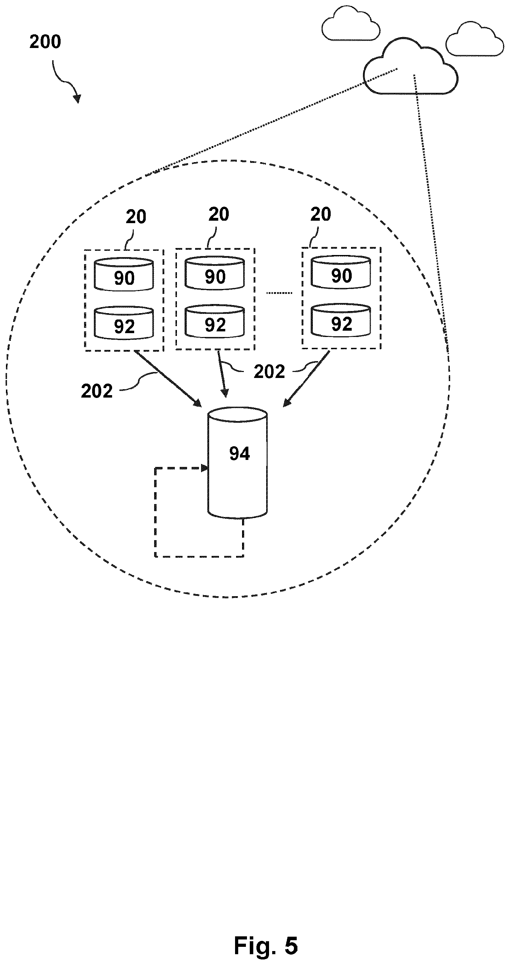

Figure 5 illustrates one embodiment of training one or more second models 92. The one or more first and second models (90,92) may be integrated into one coherent model.

The second models 92 may be configured for generating one or more of the consumption profiles 22 for the consumer, the resource buffer profile 24 for the consumer, the resource source profile 26 for the consumer, and the resource time-of-the-day prices profile 32 for the external resource supplier network.

The second models 92 may be algorithms trained by means of machine learning. The second models 92 may be trained by received datasets 86 comprising historical user consumption data. Furthermore, the models may be retrained and/or validated by comparing the generated profiles 22,24,26,36 with the actual data for consumer consumption, consumer resource production and resource time-of-the-day prices.

The models may be trained on one or more computing units such as one or more external servers, in the cloud, in the consumer controller or distributed between one or more of the computing units.

Figure 6 illustrates one embodiment of training a hyper model 94. The hyper model may be algorithms trained by means of machine learning. The hyper model receives 202 or comprises one or more of the first and/or second models 90,92 for multiple consumers (20). The hyper model may be retrained and/or validated by comparing the generated output with historical data.

## Claims

1. A computer implemented method (100) of managing resource flow (10) between a consumer (20) and an external resource supplier network (30), said method comprising acts of:
- receiving (102) a consumption profile (22) for the consumer (20) for one or more consumer units (62);
- receiving (102) one or both of a resource buffer profile (24) for the consumer (20) for one or more consumer buffer units (64) or a resource source profile (26) for the consumer (20) for one or more consumer sources (66);
- receiving (102) resource time-of-the-day prices profile (32) for the external resource supplier network (30);
- based on the consumption profile (22), the resource buffer profile (24) and/or the resource source profile (26), and the resource time-of-the-day prices profile (32), determining (104) a resource supply source (40) for covering real-time consumption (50) of the consumer, said resource supply sources (40) being one or more of the consumer's one or more buffer units (64), the consumer's one or more consumer sources (66) or the external resource supplier network (30), and
- instructing (106) a consumer controller (60) of which resource supply source (40) to be used for covering the real-time consumption (50) of the consumer,
wherein the consumption profile (22), one or both of the resource buffer profiles (24) and the resource source profile (26), and the resource time-of-the-day prices profile (32) comprises forecasted data for a first future time period (70) and wherein the resource supply source (40) is determined to obtain a minimum aggregated cost of the acquired resources (12) to cover the real-time consumption (50) of the consumer.

2. The method (100) according to claim 1, wherein determining (104) the resource supply source (40) for covering the real-time consumption (50) of the consumer is executed using a first trained data driven model (90), by
- receiving (102) the consumption profile (22), the resource buffer profile (24) and/or the resource source profile (26), and the resource time-of-the-day prices profile (32); and
- based on the received profiles (22, 24, 26), estimating (108) a resource shortage (52) over at least a second future time period (72), and
- based on the estimated resource shortage (52) and the resource time-of-the-day prices profile (32), estimating (108) an acquisition profile (34) with minimum aggregated cost of the acquired resources (12) over the second future time period (72) to determine the supply source (40) to cover the real-time consumption (50) of the consumer.

3. The method (100) according to any one of claims 1 or 2, wherein the buffer profile (24) includes available buffer capacity and available stored resources, and wherein the available stored resources are configured as supply source (40) and the available buffer capacity are configured as real-time consumption (50).

4. The method (100) according to any one of claims 2 and 3, wherein the first future time period (70) is up to 1 month, preferably up to 6 months, or 2 years, and the second future time period (72) is shorter than the first future time period (70) and ends before the first future time period (70) ends.

5. The method (100) according to any one or more of the preceding claims, comprising a further act of receiving (102) a maximum limit (36) of resource flow (10), wherein said maximum limit (36) is determined by hardware specifications at a connection point (80), connecting the consumer (20) and an external resource supplier network (30).

6. The method (100) according to any one or more of the preceding claims, wherein one or more of the consumption profiles (22) for the consumer, the resource buffer profile (24) for the consumer, the resource source profile (26) for the consumer, and the resource time-of-the-day prices profile (32) for the external resource supplier network (30) are obtained by a second trained data driven model (92) receiving datasets (86) comprising one or more of:
- historical user consumption data,
- weather forecast,
- satellite imagery,
- local condition sensory data,
- hardware specification,
- historical resource prices,
- current demand for the resources,
- current resource production,
- historical resource consumption of the consumer,
- historical resource production of the consumer, and
- historical resource buffer capacity of the consumer.

7. The method (100) according to any one or more of the preceding claims, wherein one or more of the data driven models (90,92) are trained and validated by receiving datasets (86) comprising one or more of:
- historical consumption profile (22) for the consumer,
- historical resource buffer profile (24) for the consumer,
- historical resource source profile (26) for the consumer,
- historical resource time-of-the-day prices profile (32) for the external resource supplier network (30),
- actual resource consumption of the consumer,
- actual state of the resource buffers of the consumer,
- actual resource production of the consumer,
- time-of-the-day prices for the external resource supplier, and
- historical aggregated resource costs of the end-user's resource consumption.

8. A computer implemented method (200) of obtaining a trained data driven hyper model (94) by receiving (202) one or more of the first and/or second models (90,92) for multiple consumers (20), wherein the one or more of the first and/or second models (90,92) are according to any one or more of claims 2-7.

9. The methods (100,200) according to any one or more of the preceding claims, wherein the models (90,92,94) include a parameter configuration comprising initialization parameters, learning rate, and/or an error measure.

10. The methods (100,200) according to any one or more of the preceding claims, wherein the models (90,92,94) are implemented as neural networks, e.g. autoencoders, wherein the parameter configuration comprises a number of layers, a number of neurons for each of the layers, and/or a number of epochs.

11. The methods (100,200) according to any one or more of the preceding claims, wherein artificial intelligence is used for estimating the forecasted data for the first future time period (70), for training and/or estimating the parameter configuration of the one or more data driven models (90,92,94).

12. Consumer controller (60) configured for receiving instructions of a supply source (40) to be used for covering the real-time consumption (50) of the consumer (20) and comprising means adapted to execute the received instructions of controlling which resource supply source (40) to be used for covering the real-time consumption (50) of the consumer (20), wherein the received instructions are generated by the method (100) according to any one or more of the preceding claims.

13. One or more computing units (300) configured to carry out the methods (100,200) according to any one or more of claims 1-11.

14. One or more computer program products (302) which causes the one or more computing units (300) according to claim 13 to carry out the method according to any one or more of claims 1-11 when it is executed on the one or more computing units (300).

15. One or more machine-readable storage media (304) having one or more computer program products (302) according to claim 14 stored thereon.
